Europäisches Patentamt

European Patent Office

Office européen des brevets

(11) Publication number: **0 202 925 B1**

# EUROPEAN PATENT SPECIFICATION

(45) Date of publication of patent specification: **18.12.91**   (51) Int. Cl.⁵: **B60C 15/06, B60C 15/00**

(21) Application number: **86303845.1**

(22) Date of filing: **21.05.86**

(54) A radial tyre for heavy duty.

(30) Priority: **21.05.85 JP 109972/85**

(43) Date of publication of application:
**26.11.86 Bulletin 86/48**

(45) Publication of the grant of the patent:
**18.12.91 Bulletin 91/51**

(84) Designated Contracting States:
**DE FR GB**

(56) References cited:
**US-A- 3 921 693**
**US-A- 3 964 533**
**US-A- 4 289 184**
**US-A- 4 342 353**
**US-A- 4 352 383**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Kawamura, Kazuhiko**
**Hounen-nishi syataku Rm. No. 13 12, Aza Hounen**
**Shirakawa-shi Fukushima-ken(JP)**

(74) Representative: **Stewart, Charles Geoffrey**
**SP TYRES UK LIMITED Tyre Technical Division**
**Fort Dunlop Birmingham B24 9QT(GB)**

## Description

The present invention relates to a tyre for heavy duty and more particularly to improvements in the bead regions of such tyres.

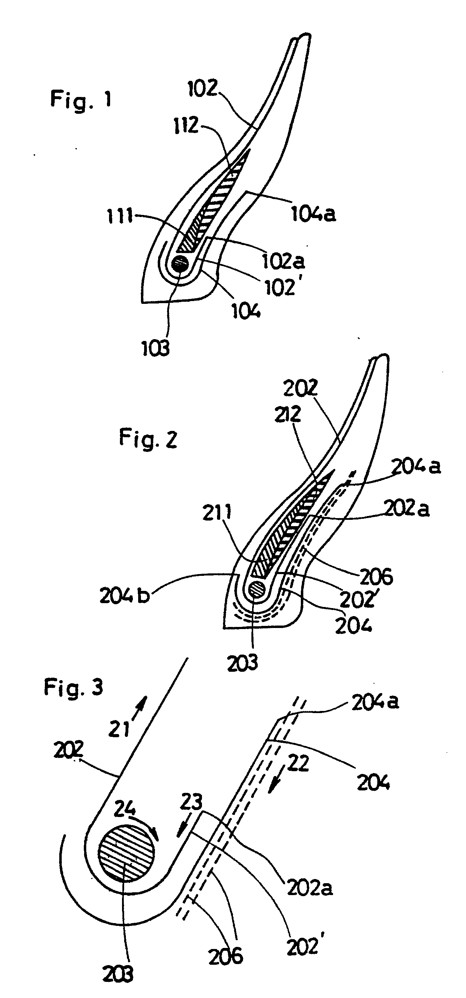

In general, as shown in Fig.1. the bead region of a tyre of this type comprises a single ply carcass 102 arranged radially or semi-radially at a small angle of 15° to 30° with respect to the equatorial line of the tyre, a bead core 103 and an apex comprising a hard rubber component 111 and a soft rubber component 112 each disposed above the bead core 103 between the main portion and turned up portion 102' of the carcass ply 102. The rubber components 111 and 112 have JIS hardness greater than 80° and of about 50° to 65°, respectively. A reinforcing layer 104 composed of at least one rubberized ply containing metal reinforcement cords embedded therein is positioned on the outside of the turned up portion 102'.

In another construction of the prior art, Japanese patent No. 967452 is known to be a good structure for reinforcing the bead section. This patent, as shown in Fig.2, is characterized in that a rubberised fibre cord reinforcing layer 206 comprises two or more layers of organic fibre cords which are crossed with each other. The layer 206 is arranged at the outside of the main carcass reinforcing layer 204 and extends radially upwardly from the bead base into the side wall region.

Radial or semi-radial have a single ply carcass composed of radially directed cords which provide a side wall which is extremely soft, and very flexible in the axial direction of the tyre. Thus the amount of deformation of radial or semi-radial tyres during one rotation is far larger than that of a bias tyre. This causes the bead region of the tyre to be strongly forced to deform like a convex surface and overhang the rim flange and this deformation causes a temperature increase.

It has been found by the inventors that the internal temperature of normal bead regions may increase up to 120°C or even 170°C due to the above mentioned temperature increase and the further heat transmission from the brake drum of vehicles. Thus, bead regions suffer from dynamic fatigue and also thermal fatigue.

These effects can be understood by considering the bead section shown in Fig.2. When the tyre is inflated, the strain action in the bead section is shown in Fig.3. The carcass ply 202 turned up around the bead core 203 moves upwardly as shown by arrow 21. The outermost end 202a of the turned-up portion 202' moves downwardly as shown by arrow 23. As a result, the turned up portion 202' causes the reinforcing layers 204 and 206 to move downwardly as shown by arrow 22, and also there is rotation of the bead core 203 as shown by arrow 24.

When the adhesion between the layers is unable to withstand the imposed strain, the carcass ply 202 pulls out from the bead core 203, this phenomenon will hereinafter be referred to as "blow out".

This blow out phenomenon is apt to occur faster with the above mentioned internal temperature rise, and the higher the temperature, the earlier it occurs.

Next, consider the dynamic strain caused by the tyre revolution under heavy load, the ground contacting area of the tyre is most subjected to deformation, and the radially inner portion of the side wall is stronly forced to deform convexly and overhang the rim flange.

Thus the cord spacing between adjacent steel cords is increased by the deformation in the radially outer portion of the bead section, and in company with such movement of the carcass cord, the turned up portion 202' and the metal cord reinforcing layer 204 are forced to move toward the outside in the axial direction of the tyre. As a result, the outer end 202a of the turned up portion 202' and the outer end 204a of the steel cord reinforcing layer 204 are more subject to stress concentration, which leads to the separations in the bead region.

With respect to the above mentioned internal temperature and strain in the bead section, various investigations were made, and it was found that in a structure having the fibre cord reinforcing layers 206 arranged outside the above mentioned metal cord reinforcing layer 204 (see Fig.2.) as proposed in Japanese Patent No. 967452, the bead section is made thick, and more heat is generated under heavy load, and the strains in the bead section are also increased.

As a result, the cord end of the fibre cord reinforcing layer 206 is apt to be the nucleus of separation due to stress concentration at the cord ends of the carcass ply 202 and the metallic cord reinforcing layer 204. Also sometimes the organic fibre cords in the fibre cord reinforcing layers 206 are broken, depending on the angle at which the fibre cord reinforcing layer (206) is arranged. Finally cut ends are apt to become the nucleus of separations in the bead section, when the tyres undergo large lateral deflection.

Furthermore, in these types of radial tyres, worn tyres are used two or three times having replaced the worn tread by recapping, and this recapping is regarded as an essential sales point for steel radial tyres.

Suitablility of a tyre carcass for recapping depends on the durability of the bead region. However, the above mentioned prior art bead regions do not always satisfy the requirement of structural integrity to be suitable for recapping.

Recently, some drivers have begun to use such tyres under even more serious service conditions, namely, long and high-speed running under heavy load and high inflation pressure.

Accordingly, further improvements of the durability of the bead regions is necessary. Against this background, an object of this invention is to provide a highly durable reinforced construction for the bead portions of large size radial tyres for trucks or other heavy vehicles, which can effectively avoid the difficult problem which has been encountered with the above mentioned prior art techniques, that is, which are resistant to use under very heavy load conditions, and suitable for recapping two or three times without failure of the base tyre.

This is practiced by means of decreasing the number of the reinforcing members which may cause separation at the outside of the bead core as far as possible, by decreasing the heat generation in the bead section as far as possible by giving full reinforcing effect to the bead section, and by increasing the durability of the bead section under the particularly severe service conditions.

Accordingly the invention provides a radial tyre for heavy duty use which comprises:

A carcass ply (2) of a substantially radial arrangement, composed of metallic cords of which both ends are turned up around a pair of circular bead cores (3) from the axially inside toward the axially outside of the tyre; in each bead region, a first reinforcing layer (4), composed of at least one metallic cord layer having metallic cords, disposed adjacent to the outside of turned up portion (2 ) of the carcass ply, and turned up around the bead core (3) from the axially outside toward the axially inside of the tyre; wherein a second reinforcing layer (6) composed of at least one fibre cord layer having fibre cords is disposed along the axially inside of the main portion of the carcass ply (2), and radially extending from the bead base portion at a height h5 to a height h3, h5 being less than 40mm from the bead base, and h3 being comprised between 0,5 and 3 times the height h1;

the height h1 of the radially outermost end of the turned up portion of the carcass ply measured perpendicularly from the bead base, is higher than the height h2 of the radially outermost end of (4a) the first reinforcing layer perpendicular from bead base;

the height h4 of the radially inward turned up portion (4b) of the first reinforcing layer measured perpendicularly from the beadbase, is lower than the height h3; and the radially innermost end (6b) of the second reinforcing layer is interposed between the inward turned up portion (4b) of the first reinforcing layer and the main portion (2) of the carcass ply.

Preferably the maximum inflated width is at a height h6 and the height h1 of the turnup portion of the carcass ply is 0.3 to 0.5 times the height h6.

The bead apex may comprise a single component but more preferably it comprises two separate rubber stocks, one adjacent to the bead core and comprising high elasticity rubber compound having a modulus of elasticity of 60 to 150 kgf/cm² at 100% elongation and a JIS (A) hardness of 70° to 90° and the other (12) being disposed adjacent to the said high elasticity rubber stocks(11) composed of a low elasticity rubber compound having a modulus of elasticity of 10 to 45 kgf/cm² at 100% elongation and a JIS (A) hardness of 45° to 65° which is lower than that of the carcass ply coating rubber.

Further aspects of the invention will be apparent from the following description by way of example only of embodiments of the invention in connection with the attached diagramatic drawings in which:

Figs. 1 and 2 are cross-sectional views showing a bead section of the prior art tyre:

Fig.3 is a schematic view showing the dislocating movement of the reinforcing components in the bead section when a radial tyre shown in Fig.2. is inflated.

Fig.4. is a cross-sectional view showing a bead portion of an embodiment of the present invention: and

Fig.5.(a) and 5(b) are a diagrammatic view showing the results of a durability test by a steel drum tester.

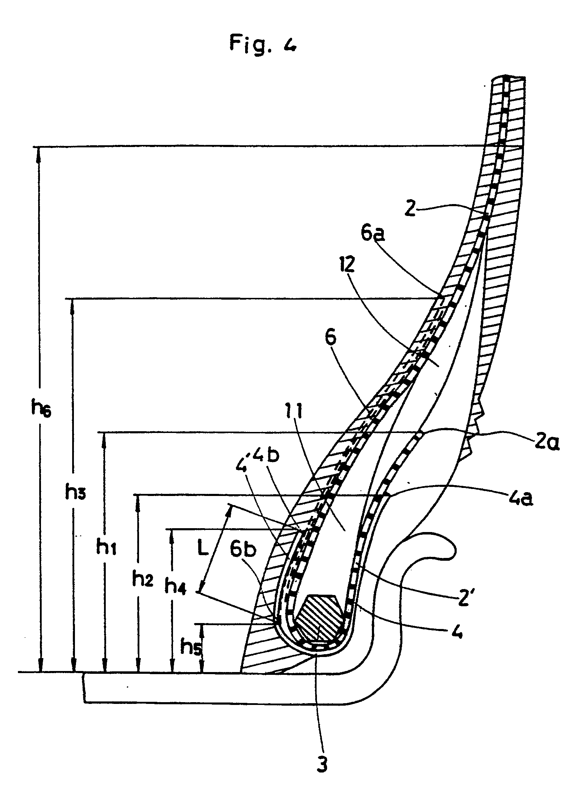

The tyre shown in Fig.4 is a radial tyre for heavy duty comprising a carcass ply 2 folded back around a bead core 3 from the axially inner to axially outer side of the tyre, a first bead reinforcing layer 4 composed of at least one metallic cord layer having metallic cords and arranged radially adjacent to and along the outerside of the turned up portion 2' of the carcass ply 2; and a second bead reinforcing layer 6 composed of at least one rubberised fibre cord layer secured to the inside of the main portion of the carcass ply 2 with respect to the tyre axial direction and overlapping by a width L the inward turned up portion 4' of the first reinforcing layer 4.

The cord of the rubberised fibre cord layers 6 are crossed with each other in their coating surface.

The height h1 of the outermost end 2a of the turned up portion 2' of the carcass ply 2 from the bead base is h igher than the height h2 of the outermost end 4a of the first reinforcing layer 4 from the bead base, that is, h1>h2.

The first reinforcing layer 4 is turned up around the bead core 3, and it's inward turned up portion 4' terminates at a height h4 from the base.

The above mentioned second reinforcing layer 6 is arranged along the inside of the carcass ply 2 and extends radially inwardly from a height h3 in the bead base portion to a height h5.

The inner end 6b of the second reinforcing layer 6 is interposed between the inward turned up portion 4' of the first reinforcing layer 4 and the main portion of the carcass ply 2 in the bead portion to give an overlap L and the relation of h3 > h4 is to be satisfied.

It is preferable that the height h1 of the outermost end 2a is 0.3 to 0.5 times as high as the height h6 which is the height from the bead base to the point in the tyre section where the width is maximum, -- when the tyre is inflated.

When the height h1 is less than 0.36 h6, the rigidity of the bead section is lower, and resistance to wear of the bead section also becomes lower due to the friction with the rim, and there is a risk for the carcass ply 2 to slip out of the bead core 3 because the turned up portion 2' is short and the bonding area to other components is insufficient.

On the other hand when the height h1 is more than 0.56 h6, the outermost end 2a extends up to near the position at which the flexure is most severe, and this prompts cracks beginning at the outermost end 2a, where the difference of rigidity is largest in the bead section under load. Thus the outermost end 2a is liable to be strongly subjected to separation failure.

Accordingly, the height h1 of the outermost end 2a of the turned up portion 2' is preferred to be 0.3 to 0.5 times as high as the height h6. This fact was confirmed by measuring of the resistance to the "blow out" phenomenon and the strain at the cord ends.

Also it is preferable that the height h2 of the outermost end 4a is 0.7 to 0.9 times as high as the height h1 of the outermost end 2a of the turned up portion 2'.

In the structure of the bead section of the conventional tyre shown in Fig. 2, the outermost end 204a of the metal cord reinforcing layer 204 is higher than the outermost end 202a of the turned up portion 202' of the carcass ply 202, and bead failures have frequently occured at the position where the outermost end 204a is located.

The inventors studied the causes of bead failure at the above mentioned position, and confirmed by many experiments that the outermost end 204a of the metal cord reinforcing layer 204 functions like a resistant layer having a high bending rigidity facing the side wall deflection which is repeated every tyre revolution. As a result, the rubber at the cut ends of each cord is broken down and caused to separate from the rubber.

Furthermore, the higher the position of the outermost end 204a of the reinforcing layer 204, the earlier the separation between the cord end and the rubber occurs.

The inventors have found that the above mentioned failure in the bead section is greatly decreased, by setting the height h2 of the outermost end 4a of the first reinforcing layer 4 lower than the height h1 of the outermost end 2a of the turned up portion 2' of the carcass ply 2 as shown in Fig. 4, namely, h2 is 0.7 to 0.9 times as high as the height h1.

When the height h2 is less than 0.7 h1, the rigidity of the bead section is lowered and the resistance to bead wear due to friction with the rim and to the casing and the resistance to failure under severe load also are lessened.

On the contrary, when the height h2 is in the range of 0.9 h1 to 1.0 h1, both the outermost ends 2a and 4a are overlapped with each other, and the stress concentration is doubled thereon, so that problems are generated earlier than ever.

Therefore, the height h2 is preferred to be 0.7 to 0.8 times as high as the height h1.

From the stand point of removing the cut ends of the turned up portion 2' from the high stress concentration zone and to maximise carcass strength, the higher the height h3, the more preferable it is, however, when the height h3 is over 3.0 h1, such effects no longer increase and so from the points of view of weight and cost reduction of tyre, the maximum value of the height h3 is 3.0 h1.

Then again if the height h3 is under h1, which leads to still further improvements in the weight and cost reduction of the tyre, such important effect as to prevent the above mentioned stress concentration is suddenly reduced, so the lower limit of height h3 is 0.5 h1.

Furthermore, the second reinforcing layer 6 has another important function preventing the outermost end 4b from being in the zone of the stress concentration and to prevent effectively the boundary area between the inward turned up portion 4' and the main portion of the carcass ply 2 from separation. Accordingly, it is important for the lower end 6b of the second reinforcing layer 6 to terminate at the position where the height from the base is h5, and also to project by a distance L between the inward turned up portion 4' of the first reinforcing layer 4 and the main portion of the carcass ply 2.

Furthermore, there is a more important factor, which is the angle of the cords of the second reinforcing layer 6. If the angle of the cords between the first reinforcing layer 4 and the turned up portion 2' of the carcass ply 2 is in the range between 30° to 80° to the right side of the radial direction outwards (viewing from the outside in the axial direction of the tyre) at the position of about height h4, the cord angle of the inward turned up portion 4' to the left side of the upwards vertical direction is an angle of 30° to 80°.

Thus, in order to let the second reinforcing layer 6 work effectively it is an important feature of the present invention to arrange the ply cords of the second reinforcing layer 6 adjacent to the first reinforcing layer crossing with each other at an angle of 30° to 80°, more preferable 40° to 70° with respect to the carcass ply cords to the right side upwards.

The second reinforcing layer 6 is composed of at least two layers of plies each consisting of cords arranged parallel to each ply and crosswise to the next ply.

As previously described, by arranging the cords of the carcass ply 2 and the cords of the second reinforcing layer 6 in a triangle structure and further by using fibre cords having a high modulus of initial elasticity of 700 to 15000 kgf/mm$^2$, more preferably 3000 to 15000 kgf/mm$^2$, the durability of the bead section is greatly improved, which was confirmed through various fleet tests.

In addition, the height h4 of the inward turned up portion 4' of the first reinforcing layer 4 is in the range of 0.2 to 0.8 times as high as the height h3 of the outermost end 6a of the second reinforcing layer 6, in order to disperse the strain by keeping the overlap zone with the second reinforcing layer 6 in a suitable range.

When the height h4 is less than 0.2 h3, the width L of the overlap zone becomes narrow, and the dispersion of strain and the lateral stiffness become unsatisfactory.

On the other hand, when the height h4 is over 0.8 h3, the outermost end 6b is located too near the outermost end 4b. Finally the height h5 of the lowermost end 6b is arranged to be less than 40 mm from the bead base, this area is around the inside of the bead core 3, and the position where the dynamic strain is small and the movement is least and the stress concentration on the cut ends of cords is very small.

A triangular cross section rubber apex is disposed above the bead core 3 between the main portion and turned up portion 2' of the carcass ply 2, which has a cross sectional shape decreasing outwardly with respect to the radial direction of the tyre from the bead core 3. The apex is composed of two rubber parts as shown in Fig.4, one of which is the so-called stiffener 11 disposed adjacent to the bead core 3 and between the main portion and the turned up portion 2' of the carcass ply 2 and having a modulus of elasticity of 60 to 150 kgf/cm$^2$ at 100% elongation and a JIS (A) hardness of 70° to 90°. The other is the so-called buffer 12 disposed adjacent to the stiffener 11 and on the side of the turned up portion 2', and composed of a low elasticity rubber compound having a modulus of elasticity of 10 to 45 kgf/cm$^2$ at 100% elongation and JIS (A) hardness of 45° to 65° which is lower than that of the stiffener 11 and the coating rubber on the carcass ply 2.

Alternatively the apex may be composed of a single soft rubber composition with a JIS (A) hardness of 45° to 65° and a modulus of elasticity of 10 to 45 kgf/cm$^2$ at 100% elongation, so as to provide the following additional advantages in the improvement of durability in the bead section.

According to the invention, the deformation of the bead region can be greatly restrained by arranging the second reinforcing layer 6 and the first reinforcing layer 4 to reinforce the inner side of the carcass ply main portion.

Thus there is less need to adopt the hard rubber compound used previously in the art which highly induces an internal temperature raise, for the bead apex to hold the high rigidity and to restrain the deformation of the bead section which has a close relation with resistance to wear of the bead section due to friction with a rim flange.

The deformation in the radial and circumferential direction can be effectively prevented, and the stress and strain can be broadly dispersed to recover the original state, so it becomes possible to use soft rubber for the apex, i.e. rubber having a low heat generation. However, hard rubber apex can be applied to the reinforcing structure at the bead section of the tyre of the present invention when required.

In the case of a tubeless tyre with 15° tapered bead seat, it was conformed through various investigation by the inventors that the tyre with a soft rubber apex of single layer can be more effectively used with good rim matching properties.

As described, it is an important feature of the present invention to use for the second reinforcing layer 6 fibre cord having a relatively high modulus of initial elasticity, and to form a bead structure having high rigidity by interposing the inward portion of the second reinforcing layer 6 between the carcass main portion and the inward turned up portion 4' of the first reinforcing layer 4 with a given width L with crossing each other.

By adopting the above mentioned structure, the durability of the bead sections is greatly improved, because the dispersion of the stress which is transmitted by the carcass ply through the beads to the wheel flanges is distributed over a large area during every tyre revolution; and the expansion of the cord spacing in carcass ply is restricted and the heat generation is controlled to a low level.

Then again the coating of the carcass ply cords, and of the first and second reinforcing layer must have an excellent adhesive force and an excellent resistance to boundary fatigue in the state of both static and dynamic conditions.

For the apex material a soft rubber stock having modulus of elasticity of 10 to 45 kgf/cm$^2$ at 100% elomgation is used for a one piece apex, or for the buffer of the combination apex composed of a soft rubber buffer and a hard rubber stiffener, therefore, the internal temperature rise in the bead sections is restrained to the lower level than that in a conventional tyre.

Thus, the durability of the bead section can be considerably improved so as to provide a reliable and high structural integrity with the ability to be recapped two or three times.

The effect of the invention will be shown by reference to comparison tests of tyres having the above described reinforc ed, bead structure, as shown in Table 1 and Fig.4, with a conventional tyre having the same construction except for the bead structure which is that shown in Table 2 and Fig.2, according to Japanese patent publication No. 52-11481. The tyre sizes are 10.00R20 14PR and 12R22.5 14PR.

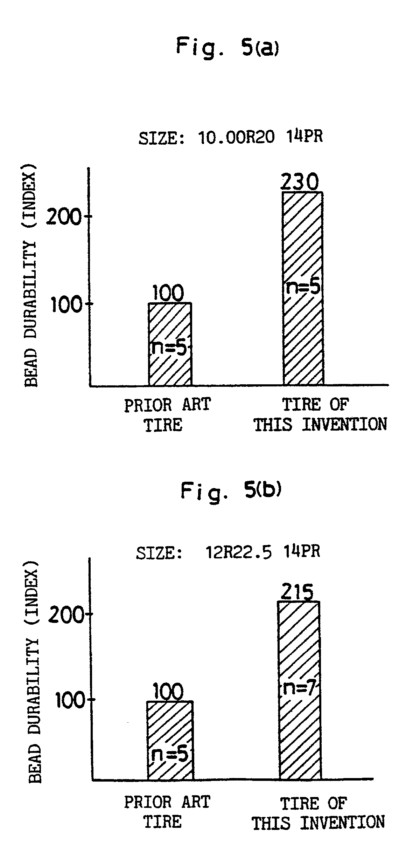

In this test, test tyres were run on a steel drum under constant work Q (load x speed) kg.km/h and normal internal pressure. The bead durability (running times until the bead portion is damaged) is measured. The results are shown in Fig.5. wherein the performance is expressed by the index based on the conventional tyre of Fig. 2 as 100.

The result of the drum durability test confirmed that the tyre according to the present invention has an excellent durability in the bead section.

In addition, fleet tests under various service conditions were carried out and the results of this test showed that the tyre according to the present invention had none of the previously discussed problems even under severe conditions, and had an excellent durability in the bead section.

Besides, it was also confirmed by these tests that the tyre in size of 12R22.5 according to the present invention was better than the conventional tyre in respect of ease in fitting the tyre to the rim and of rim matching with 15° taper rim.

EP 0 202 925 B1

## T a b l e   1

(mm)

| Construction / Sizes | 10.00R20 14PR. with tube | 12R22.5 14PR. 15 taper tubeless |
|---|---|---|
| Height (h6) at maximum section width | 132.4 | 114 |
| Height (h1) of the turned up portion (2') | 56 | 40 |

First reinforcing layer (4):

| | 10.00R20 14PR. with tube | 12R22.5 14PR. 15 taper tubeless |
|---|---|---|
| Height (h2) of the outermost end (4a) | 44 | 30 |
| Height (h4) of the outermost end (4b) of the inward turned up portion (4') | 52 | 35 |
| Cord angle * | $65°$ | $65°$ |
| Cord material | Steel(4x4) 0.175 | Steel(4x4) 0.175 |
| Cord diameter | 0.98 mm | 0.98 mm |
| 100% Modulus of coating rubber | 48 kg/cm$^2$ | 48 kg/cm$^2$ |
| No. of ply | 1 ply | 1 ply |

Second reinforcing layer (6):

| | 10.00R20 14PR. with tube | 12R22.5 14PR. 15 taper tubeless |
|---|---|---|
| Height (h3) of the outermost end | 98 | 52 |
| Height (h5) of the innermost end | 32 | 10 |
| Cord angle* | $70°$ | $70°$ |
| Cord material (crossed with each ply) | 1500 d/2 Kevlar 35 ends/5 cm | 1500 d/2 Kevlar 35 end/5 cm |
| 100% modulus of coating rubber | 48 kg/cm$^2$ | 48 kg/cm$^2$ |
| No. of ply | 2 plies | 2 plies |

Apex rubber:

| | 10.00R20 14PR. with tube | 12R22.5 14PR. 15 taper tubeless |
|---|---|---|
| JIS hardness (A)   Buffer   (12) | $58°$ | $58°$ (single layer) |
|   Stiffener (11) | $80°$ (dual layers) | |

* It is more preferable that cord angles are crossed with each other between the first and the
second reinforcing layer, but it is good even when said cord angles are paralel.

Table 2

(mm)

| Sizes<br>Construction | 10.00R20 14PR.<br>with tube | 12R22.5 14PR.<br>tubeless tire |
|---|---|---|
| Height (h6) at maximum section width | 137 | 114 |
| Height (h1) of outermost end (202a) of turned up portion (202') of carcass ply (202) | 45 | 30 |
| Metal cord reinforcing layer (204): | | |
| Height (h2) of the outermost end (204a) | 57 | 40 |
| Height (h4) of the outermost end (204b) | 53 | 22 |
| Cord angle | 65° | 65° |
| 100% modulus of coating rubber | 48 kg/cm$^2$ | 48 kg/cm$^2$ |
| Fiber code reinforcing layer (206): | | |
| Height of the outermost end | 82 | 80 |
| 100% modulus of coating rubber | 30 kg/cm$^2$ | 30 kg/cm$^2$ |
| JIS (A) hardness of stiffener (211) | 80° | --- |
| JIS (A) hardness of buffer (212) | 58° | 58° |

## Claims

1. A radial tyre for heavy duty use comprising:

a carcass ply (2) of a substantially radial arrangement, composed of metallic cords of which both ends are turned up around a pair of circular bead cores (3) from the axially inside towards the axially outside of the tyres; in each bead region, a first reinforcing layer (4) composed of at least one metallic cord layer having metallic cords, disposed adjacent to the outside of turned up portion (2) of the carcass ply, and turned up around the bead core (3) from the axially outside towards the axially inside of the tyre; characterised in that

a second reinforcing layer (6) composed of at least one fibre cord layer having fibre cords is disposed along the axially inside of the main portion of the carcass ply (2) and radially extending from the bead base portion at a height h5 to a height h3, h5 being less than 40 mm from the bead base and h3 being comprised between 0,5 and 3 times the height h1; the height h1 of the radially outermost end of the turned up portion of the carcass ply measured perpendicularly from the bead base, is higher than the height h2 of the radially outermost end of (4a) the first reinforcing layer perpendicular from bead base;

the height h4 of the radially inward turned up portion (4b) of the first reinforcing layer measured perpendicularly from the beadbase, is lower than the height h3; and the radially innermost end (6b) of the second reinforcing layer is interposed between the inward turned up portion (4b) of the first reinforcing layer and the main portion (2) of the carcass ply.

2. A radial tyre for heavy duty according to claim 1, characterised in that the maximum inflated width of the tyre lies at height h6 and the height h1 of the turned up portion (2a) of the carcass ply is 0.3 to 0.5 times as high as the height h6.

3. a radial tyre for heavy duty according to claim 1 or 2 characterised in that the height h2 of the radially outermost end (4a) of the first reinforcing layer in the radial direction is 0.7 to 0.9 times as high as the height h1 of the radially outermost end (2a) of the turned up portion of the carcass (2).

4. a radial tyre for heavy duty according to claim 1, 2 or 3 characterised in that the height h3 of the radially outermost end (6a) of the second reinforcing layer (6) is 0.7 to 3.0 times as high as the height h1 of the radially outermost end (2a) of the turned up portion (2) of the carcass ply (2).

5. a radial tyre for heavy duty according to any of claims 1-4 characterised in that the height h4 of the radially outermost end (4b) of the axially inward turned up portion (4) of the first reinforcing layer (4) is 0.2 to 0.8 times as high as the height h3 of the radially outermost end (2a) of the second reinforcing layer.

6. a radial tyre for heavy duty according to any one of claims 1-5 characterised in that the cord angle of the second reinforcing layer (6) is 30° to 80° with respect to the ply cord of the carcass main portion (2) at the height h1 of the radially outermost end (2a) of the turned up portion of the carcass ply (2).

7. a radial tyre for heavy duty according to any one of claims 1-6 characterised in that the second reinforcing layer (6) is composed of at least one rubberised ply layer having cords embedded therein which cords have a modulus of initial elasticity of 700 to 15000 kgf/mm$^2$.

8. a radial tyre for heavy duty according to any one of claims 1-7 characterised by a bead apex disposed between he main portion and turned up portion (2) of the carcass ply is composed of two separate rubber stocks (11, 12) (11) being one arranged adjacent to the bead core (3) and between the main portion (2) and turned up portion (2) of the carcass, and composed of a high elasticity rubber compound having a modulus of elasticity of 60 to 150 kgf/cm$^2$ at 100% elongation and a JIS (A) hardness of 70° to 90° and; the other (12) being disposed adjacent to the said high elasticity rubber stocks (11) composed of a low elasticity rubber compound having a modulus of elasticity of 10 to 45 kgf/cm$^2$ at 100% elongation and a JIS (A) hardness of 45° to 65° which is lower than that of the carcass ply coating rubber.

## Revendications

1. Pneumatique à carcasse radiale pour poids lourds, comprenant :
   une nappe de carcasse (2) ayant une disposition sensiblement radiale, cette nappe étant composée de câblés métalliques dont les deux extrémités sont repliées autour d'une paire de tringles circulaires (3) d'une partie axialement interne vers une partie axialement externe des pneumatiques, et
   une première couche d'armature (4) disposée dans chaque région de talon et composée d'au moins une couche ayant des câblés métalliques, disposée près de l'extérieur de la partie repliée (2) de la nappe de carcasse et repliée autour de la tringle (3) de la partie axialement externe vers la partie axialement interne du pneumatique, caractérisé en ce que :

une seconde couche d'armature (6) composée d'au moins une couche ayant des câblés de fibres est disposée le long de la partie axialement interne de la partie principale de la nappe de carcasse (2) et est disposée radialement de la partie de base de talon ayant une hauteur h5 jusqu'à une hauteur h3, h5 étant inférieur à 40 mm pour la base de talon et h3 étant compris entre 0,5 et 3 fois la hauteur h1,

la hauteur h1 de l'extrémité radialement la plus à l'extérieur de la partie repliée de la nappe de carcasse, mesurée perpendiculairement depuis la base de talon, est supérieure à la hauteur h2 de l'extrémité radialement la plus externe (4a) de la première couche d'armature perpendiculairement à la base de talon, et

la hauteur h4 de la partie repliée radialement vers l'intérieur (4b) de la première couche d'armature, mesurée perpendiculairement par rapport à la base de talon, est inférieure à la hauteur h3, et l'extrémité radialement la plus interne (6b) de la seconde couche d'armature est placée entre la partie repliée vers l'intérieur (4b) de la première couche d'armature et la partie principale (2) de la nappe de carcasse.

2. Pneumatique à carcasse radiale pour poids lourds selon la revendication 1, caractérisé en ce que la largeur maximale à l'état gonflé du pneumatique se trouve à une hauteur h6 et la hauteur h1 de la partie repliée (2a) de la nappe de carcasse est comprise entre 0,3 et 0,5 fois la hauteur h6.

3. Pneumatique à carcasse radiale pour poids lourds selon la revendication 1 ou 2, caractérisé en ce que la hauteur h2 de l'extrémité radialement la plus externe (4a) de la première couche d'armature, dans la direction radiale, est comprise entre 0,7 et 0,9 fois la hauteur h1 de l'extrémité radialement la plus externe (2a) de la partie repliée de la carcasse (2).

4. Pneumatique à carcasse radiale pour poids lourds selon la revendication 1, 2 ou 3, caractérisé en ce que la hauteur h3 de l'extrémité radialement la plus externe (6a) de la seconde couche d'armature (6) est comprise entre 0,7 et 3,0 fois la hauteur h1 de l'extrémité radialement la plus externe (2a) de la partie repliée (2) de la nappe de carcasse (2).

5. Pneumatique à carcasse radiale pour poids lourds selon l'une quelconque des revendications 1 à 4, caractérisé en ce que la hauteur h4 de l'extrémité radialement la plus externe (4b) de la partie repliée axialement vers l'intérieur (4) de la première couche d'armature (4) est comprise entre 0,2 et 0,8 fois la hauteur h3 de l'extrémité radialement externe (2a) de la seconde couche d'armature.

6. Pneumatique à carcasse radiale pour poids lourds selon l'une quelconque des revendications 1 à 5, caractérisé en ce que l'angle des câblés de la seconde couche d'armature (6) est compris entre 30 et 80° par rapport aux câblés de la nappe de la partie principale (2) de carcasse à la hauteur h1 de l'extrémité radialement la plus externe (2a) de la partie repliée de la nappe de carcasse (2).

7. Pneumatique à carcasse radiale pour poids lourds selon l'une quelconque des revendications 1 à 6, caractérisé en ce que la seconde couche d'armature (6) est composée d'au moins une couche d'une nappe caoutchoutée ayant des câblés enrobés, les câblés ayant un module d'élasticité initiale compris entre $7.10^4$ et $1,5.10^6$ bar (kg/mm$^2$).

8. Pneumatique à carcasse radiale pour poids lourds selon l'une quelconque des revendications 1 à 7, caractérisé par une pointe de bourrage de talon disposée entre la partie principale et la partie repliée (2) de la nappe de carcasse et composée de deux matériaux caoutchouteux séparés (11, 12), l'un (11) étant adjacent à la tringle (3) et étant placé entre la partie principale (2) et la partie repliée (2) de la carcasse et étant formé d'une composition de caoutchouc d'élasticité élevée, ayant un module d'élasticité de 60 à 150 bars (kg/cm$^2$) pour un allongement de 100 % et une dureté JIS (A) de 70 à 90°, et l'autre (12) étant adjacent au matériau caoutchouteux (11) d'élasticité élevée, et étant formé d'une composition de caoutchouc de faible élasticité, ayant un module d'élasticité de 10 à 40 bars (kg/cm$^2$) pour un allongement de 100 % et une dureté JIS (A) de 45 à 65° qui est inférieure à celle du caoutchouc revêtant la nappe de carcasse.

**Patentansprüche**

1. Radialreifen für Schwerlasteinsatz, welcher umfaßt:

eine Karkasslage (2) einer im wesentlichen radialen Anordnung, zusammengesetzt aus Metallkorden, deren beide Enden um ein Paar kreisförmiger Wulstkerne (3) von der axialen Innenseite zur axialen Außenseite des Reifens aufwärts umgeschlagen sind; eine erste Verstärkungsschicht (4) in jedem Wulstbereich, zusammengesetzt aus mindestens einer Metallkordlage mit Metallkorden, die benachbart zur Außenseite des aufwärts zurückgeschlagenen Abschnitts (2) der Karkasslage angeordnet und von der axial äußeren Seite zu der axial inneren Seite des Reifens nach oben um den Wulstkern (3) zurückgeschlagen sind;

dadurch gekennzeichnet, daß

eine aus mindestens einer Faserkordlage mit Faserkorden zusammengesetzte zweite Verstärkungsschicht (6) längs der axialen Innenseite des Hauptabschnittes der Karkasslage (2) angeordnet ist, die sich radial von dem Wulstgrundabschnitt an einer Höhe h5 zu einer Höhe h3 erstreckt, wobei h5 weniger als 40 mm vom Wulstgrund entfernt ist und h3 zwischen dem 0,5- und dem 3-fachen der Höhe h1 umfaßt;

die Höhe h1 des radial äußersten Endes des aufwärts zurückgeschlagenen Abschnitts der Karkasslage, senkrecht vom Wulstgrund gemessen, größer als die Höhe h2 des radial äußersten Endes (4a) der ersten Verstärkungsschicht senkrecht vom Wulstgrund ist;

die Höhe h4 des radial nach innen oben zurückgeschlagenen Abschnitts (4b) der ersten Verstärkungsschicht, senkrecht vom Wulstgrund gemessen, geringer als die Höhe h3 ist; und das radial innerste Ende (6b) der zweiten Verstärkungsschicht zwischen dem nach innen oben zurückgeschlagenen Abschnitt (4b) der ersten Verstärkungsschicht und dem Hauptabschnitt (2) der Karkasslage eingesetzt ist.

2. Radialreifen für Schwerlasteinsatz nach Anspruch 1, dadurch gekennzeichnet, daß die maximale Breite des aufgepumpten Reifens bei einer Höhe h6 liegt und die Höhe h1 des nach oben zurückgeschlagenen Abschnitts (2a) der Karkasslage 0,3 bis 0,5 mal so hoch wie die Höhe h6 ist.

3. Radialreifen für Schwerlasteinsatz nach Anspruch 1 oder 2, dadurch gekennzeichnet, daß die Höhe h2 des radial äußersten Endes (4a) der ersten Verstärkungsschicht in Radialrichtung 0,7 bis 0,9 mal so hoch wie die Höhe h1 des radial äußersten Endes (2a) des nach oben zurückgeschlagenen Abschnitts der Karkasse (2) ist.

4. Radialreifen für Schwerlasteinsatz nach Anspruch 1, 2 oder 3, dadurch gekennzeichnet, daß die Höhe h3 des radial äußersten Endes (6a) der zweiten Verstärkungsschicht (6) 0,7 bis 3,0 mal so groß wie die Höhe h1 des radial äußersten Endes (2a) des nach oben zurückgeschlagenen Abschnitts (2) der Karkasslage (2) ist.

5. Radialreifen für Schwerlasteinsatz nach einem der Ansprüche 1 bis 4, dadurch gekennzeichnet, daß die Höhe h4 des radial äußersten Endes (4b) des axial nach innen oben zurückgeschlagenen Abschnitts (4) der ersten Verstärkungsschicht (4) 0,2 bis 0,8 mal so hoch wie die Höhe h3 des radial äußersten Endes (2a) der zweiten Verstärkungsschicht ist.

6. Radialreifen für Schwerlasteinsatz nach einem der Ansprüche 1 bis 5, dadurch gekennzeichnet, daß der Kordwinkel der zweiten Verstärkungsschicht (6) 30° bis 80° bezüglich der Kordlage des Karkass-Hauptabschnitts (2) bei der Höhe h1 des radial äußersten Endes (2a) des nach oben zurückgeschlagenen Abschnitts der Karkasslage (2) ist.

7. Radialreifen für Schwerlasteinsatz nach einem der Ansprüche 1 bis 6, dadurch gekennzeichnet, daß die zweite Verstärkungsschicht (6) aus mindestens einer gummierten Lagenschicht mit darin eingebetteten Korden zusammengesetzt ist, deren Korde einen Modul der Anfangselastizität von 700 bis 15 000 kp/mm² besitzen.

8. Radialreifen für Schwerlasteinsatz nach einem der Ansprüche 1 bis 7, dadurch gekennzeichnet, daß ein

11

zwischen dem Hauptabschnitt und dem nach oben zurückgeschlagenen Abschnitt (2) der Karkasslage angeordneter Wulstreiter zusammengesetzt ist aus zwei separaten Gummimaterialien (11, 12), von denen eines (11) benachbart zum Wulstkern (3) und zwischen dem Hauptabschnitt (2) und dem nach oben zurückgeschlagenen Abschnitt (2) der Harkasse angeordnet ist und zusammengesetzt aus einer Gummimasse hoher Elastizität mit einem Elastizitätsmodul von 60 bis 150 kp/cm$^2$ bei 100% Längung und einer Härte nach JIS (A) von 70° bis 90° und das andere (12) benachbart zu dem Hochelastizitäts-Gummimaterial (11) untergebracht und zusammengesetzt ist aus einer Gummimasse niederer Elastizität mit einem Elastizitätsmodul von 10 bis 45 kp/cm$^2$ bei 100% Längung und einer Härte nach JIS (A) von 45° bis 65°, die geringer als die des Karkasslagen-Beschichtungsgummis ist.

Fig. 1

102
112
104a
111
102a
102'
104
103

Fig. 2

202
212
204a
202a
211
206
202'
204b
204
203

Fig. 3

21
204a
202
22
204
24
23
202a
203
206
202'

## Fig. 4

# Fig. 5(a)

SIZE: 10.00R20 14PR

BEAD DURABILITY (INDEX)

200

100

230

n=5

100

n=5

PRIOR ART
TIRE

TIRE OF
THIS INVENTION

# Fig. 5(b)

SIZE: 12R22.5 14PR

BEAD DURABILITY (INDEX)

200

100

215

n=7

100

n=5

PRIOR ART
TIRE

TIRE OF
THIS INVENTION